# EUROPÄISCHE PATENTANMELDUNG

(11) **EP 1 398 582 A2**
(43) Veröffentlichungstag der Anmeldung: **17.03.2004**
(21) Anmeldenummer: 03019219.9
(22) Anmeldetag: 26.08.2003
(51) Int. Cl.: F24J 2/20

(54) **Solar-Flachkollektor zur Beheizung eines wärmeführenden Mediums**

(30) Priorität: 16.09.2002 DE 10242925
(71) Anmelder: Formula Kunststoff GmbH, 92262 Birgland/Opf. (DE)
(72) Erfinder: Sander, Ulrich, 90559 Burgthann (DE)
(74) Vertreter: Hübner, Gerd, Dipl.-Phys.

(57) **Zusammenfassung**

Ein Solar-Flachkollektor zur Beheizung eines wärmeführenden Mediums umfasst eine Zu- und Ableitung (11, 14) für das Medium, einen im Wesentlichen plattenförmigen Leitungsträger (2), in den auf einer Seite (4) ein oben offener Leitungskanal (8) in Form einer Vertiefung vorzugsweise mit mäanderartigem Verlauf in der Plattenebene einstückig eingeformt ist, und eine auf den Leitungsträger (2) auf der Seite (4) des offenen Leitungskanals (8) aufgesetzte, lichtdurchlässige Abschlussplatte (5), die mindestens auf Teilbereichen (16) beiderseits des Leitungskanals (8) mit dem Leitungsträger (2) fest verbunden ist.

## Beschreibung

Die Erfindung betrifft einen Solar-Flachkollektor zur Beheizung eines wärmeführenden Mediums, insbesondere zur Direktbeheizung von Brauchwasser, mit einer Zu- und Ableitung für das Medium.

Derartige Kollektoren sind in unterschiedlichsten Ausprägungen, insbesondere was ihre Komplexität betrifft, bekannt. So zeigt die DE 43 11 283 C2 einen sehr einfach aufgebauten Kollektor, bei dem auf einer Platte aus schwarz eingefärbtem Kunststoff eine tranzluzente Folie aus UV-durchlässigem Kunststoff aufgelegt ist. Durch linienförmige Schweißzonen entstehen zwischen der Folie und der Platte mäanderartige Strömungswege für das zu erwärmende Wasser.

Einen ähnlichen Aufbau zeigt die DE 195 46 100, wo auf einer Grundplatte Stege zur Ausbildung der Strömungswege aufgesetzt sind, die wiederum auf der der Sonne zugewandten Seite durch eine durchsichtige Wand abgeschlossen sind. In einer alternativen Ausführungsform zeigt diese Druckschrift einen Kollektor, bei dem eine entsprechend profilierte, im Querschnitt einem Trapezblech ähnliche Abdeckung mit der Grundplatte verklebt ist.

Der Erfindung liegt die Aufgabe zugrunde, einen Solar-Flachkollektor anzugeben, der bei einfachem Aufbau leicht zu montieren ist und aufgrund seiner Grundkonstruktion universelle Einsatzmöglichkeiten bietet.

Diese Aufgabe wird laut Kennzeichnungsteil des Anspruches 1 durch einen Aufbau gelöst, der umfasst
- einen im Wesentlichen plattenförmigen Leitungsträger, in den auf einer Seite ein oben offener Leitungskanal in Form einer Vertiefung vorzugsweise mit mäanderartigem Verlauf in der Plattenebene einstückig eingeformt ist, und
- eine auf den Leitungsträger auf der Seite der offenen Leitungskanäle aufgesetzte, lichtdurchlässige Abschlussplatte, die mindestens auf Teilbereichen beiderseits der Leitungskanäle mit dem Leitungsträger fluiddicht verbunden ist.

Der erfindungsgemäße Solar-Flachkollektor ist erkennbar sehr einfach aufgebaut, wobei der Leitungsträger als Hauptteil quasi das Rückgrat des Kollektors bildet. Dabei sorgen die zur Bildung des Leitungskanals darin eingeformten Vertiefungen wie bei üblichen Flächenteilen als Profilierungen für eine Versteifung. Insoweit nimmt der Leitungskanal eine typische Doppelfunktion war, nämlich einerseits den Transport des wärmeführenden Mediums und andererseits eine Versteifung des plattenförmigen Leitungsträgers. Dieses Grundgerüst des Flachkollektors muss dann lediglich mit der lichtdurchlässigen Abschlussplatte auf der Seite des offenen Leitungskanals komplettiert werden.

Bevorzugte Ausführungsformen des Flachkollektors betreffen die Verbindung zwischen der Abschlussplatte und der Leitungsplatte, die zwischen den einzelnen Ästen des Leitungskanals jeweils nur in zueinander beabstandeten Punkten erfolgt. Bevorzugtermaßen wird durch flache Noppen auf der Oberseite der Leitungsplatten ein Kapillarspalt zwischen der Abschlussplatte und der Leitungsplatte erzielt, wodurch das wärmeführende Medium mit einem geringen Volumenstrom zwischen den einander zugewandten, nicht mechanisch verbundenen Zonen von Abschlussplatte und Leitungsplatte hindurchgelangen kann. Dadurch werden Verunreinigungen, die sich bei einfacher enger Anlage durch Toträume zwischen diesen beiden Bauteilen bilden können, grundsätzlich vermieden bzw. zumindest fortgespült. Die Alternative zur Vermeidung solcher Verunreinigungen wäre die komplette stoffschlüssige Verbindung oder Verklebung der aneinander liegenden Zonen von Abschlussplatte und Leitungsplatte zwischen den Ästen des Leitungskanals. Dies würde einen unverhältnismäßig hohen Herstellungsaufwand mit sich bringen.

Weitere bevorzugte Ausführungsformen beziehen sich auf die mechanische Verstärkung und den Schutz des Flachkollektors gegen Umwelteinflüsse. So wird durch den umlaufenden Stützrand nach hinten und die rückseitige Grundplatte der Kollektor versteift, wobei durch die Hartschaumeinlage zwischen Leitungs- und Grundplatte die mechanische Unempfindlichkeit einerseits und die thermische Isolierung andererseits verbessert werden. Der Hartschaum dient ferner der mechanischen Verbindung von Grundund Leitungsplatte und erfüllt somit eine Mehrfachfunktion.

Der Modulcharakter des Kollektors wird schließlich durch eine frontseitige lichtdurchlässige Abdeckwanne komplettiert.

Ein besonderer Vorteil des erfindungsgemäßen Solar-Flachkollektors ergibt sich bei der Auslegung der frontseitigen Abdeckplatte und der gegebenenfalls vorhandenen Abdeckwanne aus Acrylglas, also aus einem vorzugsweise glasklaren PMMA-Kunststoff. Dieses Material ist UVdurchlässig und UV-beständig, sodass durch den Einfluss des diese Kollektorbauteile durchdringenden UV-Anteils des Sonnenlichtes die Bildung von Bakterien und Viren in dem wärmeaufnehmenden Medium im Kollektor verhindert wird. Somit können dort Desinfektionsmaßnahmen entfallen ten kann als wärmeaufnehmendes, direkt beheiztes Medium das Brauchwasser selbst verwendet werden, das anschließend zur Benutzung beim Kochen, im Haushalt oder zur Körperpflege eingesetzt werden kann. Da ein Wärmetauscher zwischen zwei getrennten Kreisläufen damit entfällt, ergibt sich eine optimale Wärmeausnutzung.

Erfindungsgemäße Solar-Flachkollektoren können in üblichen Solaranlagen mit netzabhängiger Stromversorgung für eine Umwälzpumpe und einer entsprechenden Steuerung in Verbindung mit einem drucklosen Wasserspeicher eingesetzt werden. Letzterer kann direkt zwischen einer Brauchwasser-Zulaufleitung und einer Brauchwasser-Ablaufleitung eingeschaltet sein. Insoweit findet also eine Direktbeheizung des Brauchwassers über den Solar-Flachkollektor statt.

Aufgrund seiner einfachen Konstruktion und Kompaktheit ist der erfindungsgemäße Kollektor besonders für Solarheizanlagen geeignet, die ohne Strom- und Wasser-Netzanschluss betrieben werden sollen, also beispielsweise auf Wochenendgrundstücken oder im mobilen Einsatz etwa auf Wohnanhängern oder Campingfahrzeugen. Dort braucht ein erfindungsgemäßer Solar-Flachkollektor nur zu- und ablaufseitig mit einem Wasserspeicher verbunden werden und eine sonnenabhängig gesteuerte Förderpumpe zur Förderung des Wassers vom Wasserspeicher zum Flachkollektor eingeschaltet werden. Die Förderpumpe kann dabei über ein Photovoltaikelement stromversorgt oder eine akkumulatorbetriebene Pumpe sein. Letzterer ist ein Lichtsensor zur sonnenabhängigen Betriebssteuerung zuzuordnen. Näheres zu dieser Solarheizanlage ergibt sich aus der Beschreibung des entsprechenden Ausführungsbeispiels.

Weitere Merkmale, Einzelheiten und Vorteile der Erfindung ergeben sich aus der nachfolgenden Beschreibung, in der ein Ausführungsbeispiel anhand der beigefügten Zeichnung näher erläutert wird. Es zeigen:
- Fig. 1: eine perspektivische Explosionsdarstellung eines SolarFlachkollektors,
- Fig. 2: eine Ansicht der Leitungsplatte des Kollektors von der Rückseite her,
- Fig. 3: einen Querschnitt der Leitungsplatte entlang der Schnittlinie A-A gemäß Fig. 2,
- Fig. 4: einen vergrößerten Teilquerschnitt gemäß Einzelheit B nach Fig. 3 und
- Fig. 5 - 7: schematische Diagramme von Solarheizanlagen mit einem Flachkollektor gemäß Fig. 1 - 4.

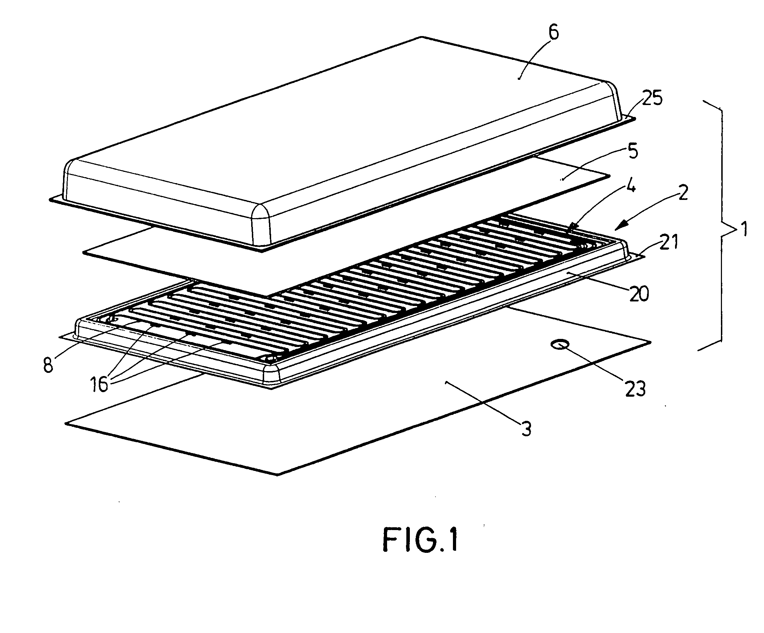

Wie aus Fig. 1 deutlich wird, besteht der als Ganzes mit 1 bezeichnete Solar-Flachkollektor aus einem im Wesentlichen plattenförmigen, zentralen Leitungsträger 2, der als Tiefziehteil aus Acryl besteht. Dieser Leitungsträger 2 wird rückseitig von einer Grundplatte 3 und auf der der Sonne zugewandten Seite 4 von einer Abschlussplatte 5 aus UV-durchlässigem Acrylglas flankiert. Die gesamte Frontseite des Flachkollektors 1 mit dem Leitungsträger 2 und der Abschlussplatte 5 wird von einer ebenfalls UV-durchlässigen, flachen Abdeckwanne 6 abgeschlossen.

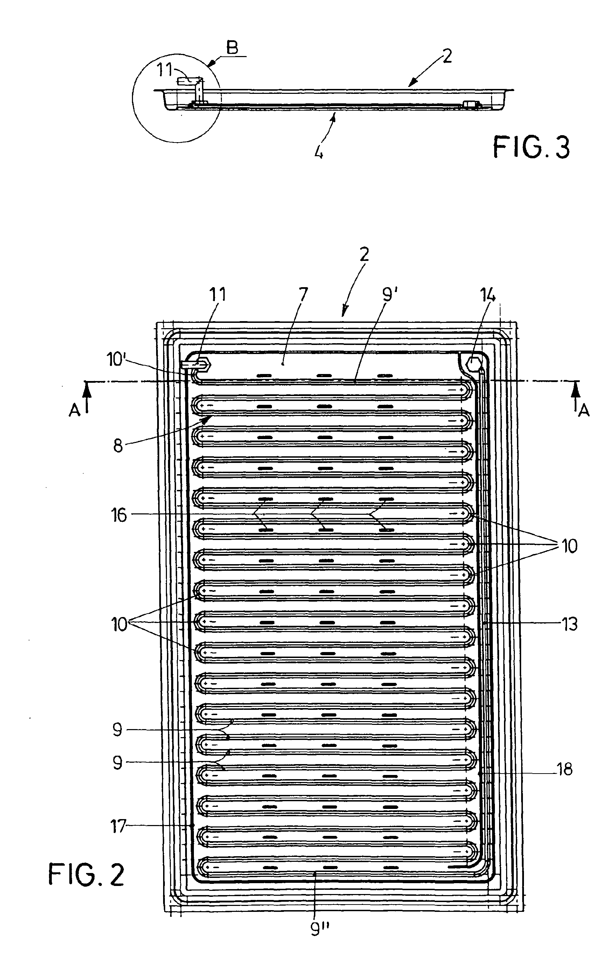

Wie aus den Fig. 2-4 hervorgeht, ist das zentrale Plattenteil 7 des Leitungsträgers 2 mit einer durchgehenden Vertiefung versehen, die mit ihrem mäanderartigen Verlauf einen Leitungskanal 8 mit parallel nebeneinander liegenden, geraden Querästen 9 und endseitigen Verbindungsbögen 10 bildet. Der letzte Querast 9' auf einer Seite mündet über einen Verbindungsbogen 10' in einen Zulaufstutzen 11 für das zu erwärmende Brauchwasser, der über einen Flansch 12 befestigt und nach hinten vom Leitungsträger 2 absteht.

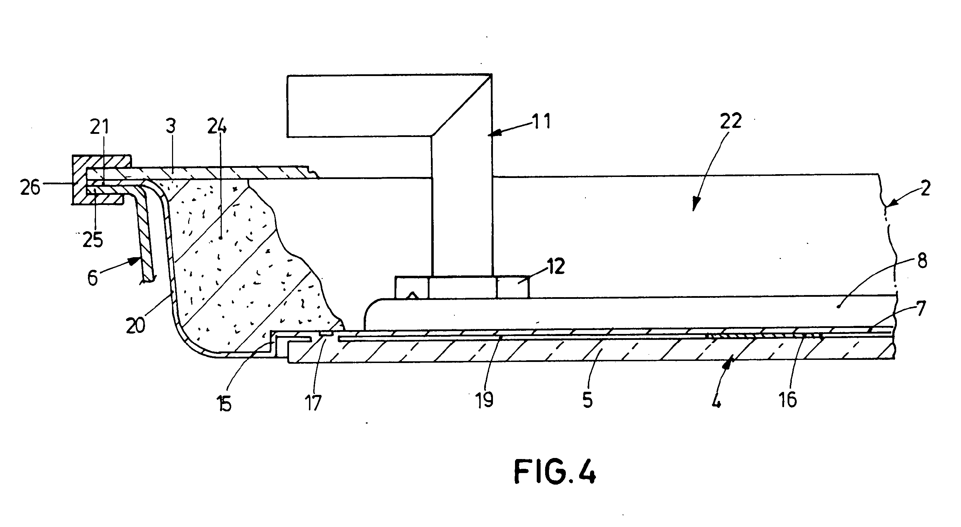

Der gegenüber liegende letzte Querast 9" setzt sich in einen Längsast 13 des Leitungskanals 8 fort, der in einem Ablaufstutzen 14 mündet, der analog dem Zulaufstutzen 11 ausgeführt ist und wiederum nach hinten absteht. Wie aus Fig. 1 in Verbindung mit Fig. 4 hervorgeht, ist das zentrale Plattenteil 7 des Leitungsträgers 2 durch einen Rücksprung 15 etwas vertieft angeordnet. Auf seiner der Sonne zugewandten Oberseite 4 sind in dem Tiefziehteil einerseits zwischen jedem zweiten Querast 9 in Querrichtung verteilt drei stegförmige, kurze Noppen 16 eingeformt, die mit einer Höhe von wenigen Zehntel Millimeter über das Plattenteil 7 hervorstehen. Desgleichen ist das gesamte Plattenteil 7 parallel zu seinem Rand mit einem umlaufenden, ununterbrochenen Randsteg 17 versehen. Ferner ist ein den Längsast 13 auf der Innenseite flankierender Zwischensteg 18 vorgesehen.

Die frontseitige Abschlussplatte 5 wird nun innerhalb des umlaufenden Rücksprungs 15 auf das Plattenteil 7 aufgesetzt und kommt auf den Noppen 16, dem Randsteg 17 und dem Zwischensteg 18 zur Anlage. Über eine Laser- oder Ultraschall-Verschweißung wird dann die Abschlussplatte 5 dauerhaft mit diesen erhabenen Zonen des Plattenteils 7 verbunden. Dadurch wird einerseits der Leitungskanal nach oben abgedeckt und das gesamte Mäandersystem hermetisch nach außen abgeschlossen. Durch die Noppen 16 wird dabei allerdings im Bereich der Queräste und Verbindungsbögen 9, 10 ein Kapillarspalt 19 zwischen dem Plattenteil 7 und der Abschlussplatte 5 erzeugt, durch den das wärmeführende Medium, wie beispielsweise Brauchwasser noch hindurchtreten kann. Durch diese Maßnahme muss einerseits nicht eine aufwändig anzulegende, durchgehende Schweißnaht zwischen den Querästen 9 hergestellt werden, andererseits wird durch den Kapillarspalt verhindert, dass sich Verunreinigungen in mikroskopischen Hohlräumen zwischen Plattenteil 7 und Abschlussplatte 5 ansammeln, die zu einem hygienischen Problem für das in dem Kollektor direkt beheizte Brauchwasser führen können.

Der Zwischensteg 18 sorgt dafür, dass von dem Kapillarspalt 19 aus kein Wasser zum Längsast 13 durchtreten kann, das noch nicht einen wesentlichen Teil des Mäandersystems passiert hat.

Wie ferner aus den Fig. 1 und 4 hervorgeht, ist der Leitungsträger 2 an seinem Umfang mit einem nach hinten abstehenden, umlaufenden Stützrand 20 versehen, der in einem zum Plattenteil 7 parallel nach außen abstehenden Randsteg 21 ausläuft. Auf diesem Randsteg 21 ist von hinten die Grundplatte 3 aufgesetzt, die aus dem gleichen Material wie der Leitungsträger 2 besteht. Der Zwischenraum 22 zwischen diesen Bauteilen wird dann über die eine Öffnung für den Ablaufstutzen 14 mit einem Hartschaum 24 ausgeschäumt, der den Leitungsträger 2 abstützt und gleichzeitig für eine mechanische Verbindung zwischen diesem und der Grundplatte 3 nach Art eines Vergusses sorgt.

Schließlich ist die Abdeckwanne 6 mit einem ebenfalls seitlich abstehenden Randsteg 25 auf den Randsteg 21 des Leitungsträgers 2 gesetzt und der gesamte Verbund aus den Randstegen 21, der Grundplatte 3 und dem Randsteg 25 durch ein aufgesetztes, rundumlaufendes Aluminiumprofil 26 geschützt und abgeschlossen.

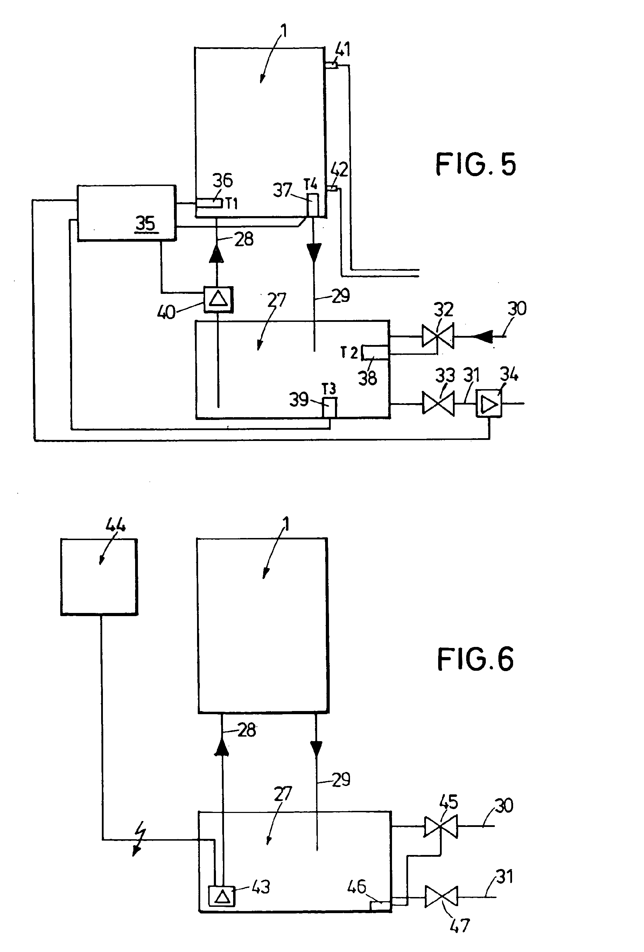

Anhand der Fig. 5-7 werden nun verschiedene Einsatzmöglichkeiten des Solar-Flachkollektors 1 aufgezeigt. So ist in Fig. 5 eine Solarheizanlage diagrammatisch dargestellt, die mit einem netzabhängigen Strom- und Wasseranschluss versehen ist. Der Flachkollektor 1 ist dabei mit einem drucklosen Wasserspeicher 27 über eine Zulaufleitung 28 und eine Rücklaufleitung 29 verbunden. Der Wasserspeicher 27 selbst weist eine Zulauf-Frischwasserleitung 30 und eine Brauchwasserleitung 31 auf, die jeweils mit Magnetventilen 32, 33 versehen sind. In die Brauchwasserleitung 31 ist eine Druckerhöhungspumpe 34 eingebaut.

Eine Steuerung 35 ist mit den Magnetventilen 32, 33 und mehreren Temperaturfühlern 36 - 39 im Flachkollektor 1 bzw. Wasserspeicher 27 verbunden. So sind zwei Temperaturfühler 36, 37 an der Zulaufleitung 28 bzw. der Rücklaufleitung 29 im Flachkollektor 1 vorgesehen. Die beiden weiteren Temperaturfühler 38 und 39 sitzen oben im Bereich des Wasserzulaufs bzw. im Bodenbereich des Wasserspeichers 27.

Schließlich ist in der Zulaufleitung 28 zwischen Wasserspeicher 27 und Flachkollektor 1 eine Umwälzpumpe 40 vorgesehen, die über die Steuerung 35 betätigt wird.

### Die Funktionsweise der Anlage ist wie folgt zu erläutern:

Die Steuerung 35 setzt die Umwälzpumpe 40 bei Erreichen einer eingestellten Oberflächentemperatur am Temperaturfühler 36 ein. Der Fühler 38 im Wasserspeicher 27 schaltet das Magnetventil 32 frei, d. h. dass ein Kaltwasserzulauf zum Wasserspeicher 27 erfolgen kann. Nach Erreichen der eingestellten Temperatur durch entsprechende Detektion über den Temperaturfühler 39 schließt das Magnetventil 32 wieder. Die Umwälzpumpe 40 läuft dabei bis über den Fühler 29 bis das Erreichen einer Mindesttemperatur erfasst wird. Ist dies der Fall, wird die Umwälzpumpe 40 durch die Steuerung 35 abgeschaltet.

Das zweite Magnetventil 33 öffnet bei Erreichen einer bestimmten Wassertemperatur im Bodenbereich des Wasserspeichers 27, was über den Temperaturfühler 39 erfasst wird. Bei Brauchwasserentnahme schaltet sie Druckerhöhungspumpe 34 dann ein. Die Brauchwassertemperatur selbst, wie sie über den Temperaturfühler 39 erfasst wird, wird an der Steuerung 35 zur Anzeige gebracht.

Schließlich sind in Fig. 5 am Flachkollektor 2 noch Nebenanschlüsse 41, 42 zur Aneinanderreihung mehrerer Kollektoren gezeigt.

In Fig. 6 ist eine Heizanlage gezeigt, bei der keine Netzspannungsversorgung vorliegt. Dabei ist der Wasserspeicher 27 jedoch noch an eine öffentliche Wasserleitung angeschlossen, sodass Zulauf-Wasserleitung 30 und Brauchwasserleitung 31 nach wie vor vorhanden sind. Statt der Umwälzpumpe 40 ist bei dieser Ausführung der Anlage eine Solarpumpe 43 vorgesehen, die über ein Photovoltaikelement 44 mit Energie versorgt wird. Die Solarpumpe 43 fördert Wasser aus dem Wasserspeicher 27 über die Zulaufleitung 28 in den Flachkollektor 1, von wo aus das Wasser über die Rücklaufleitung 29 wieder in den Wasserspeicher 27 gelangt. Der Wasserzulauf in dem Wasserspeicher 27 aus dem öffentlichen Netz wird über ein hydraulisches Thermostatventil 45 gesteuert, das mit einem nicht näher dargestellten Schwimmerventil kombiniert ist. Darüber ist die Füllhöhe des Wassers im Speicher 27 einstellbar. Das Thermostatventil 45 ist mit einem am Boden des Wasserspeichers angeordneten Thermofühler 46 gekoppelt, über den das Thermostatventil bei Erreichen der eingestellten Thermostattemperatur geöffnet wird. Die Brauchwasserleitung 31 liegt über diesem Thermofühler 46, sodass im Wasserspeicher 27 ständig eine Restwassermenge vorhanden ist.

Durch die vorstehende Anordnung ist eine sogenannte "Kaskadenschaltung" gegeben, d. h., dass der Kollektor jeweils nur eine Kleinmenge an Wasser aufheizt und erst bei Erreichen der Wassertemperatur das Thermostatventil erneut geöffnet wird.

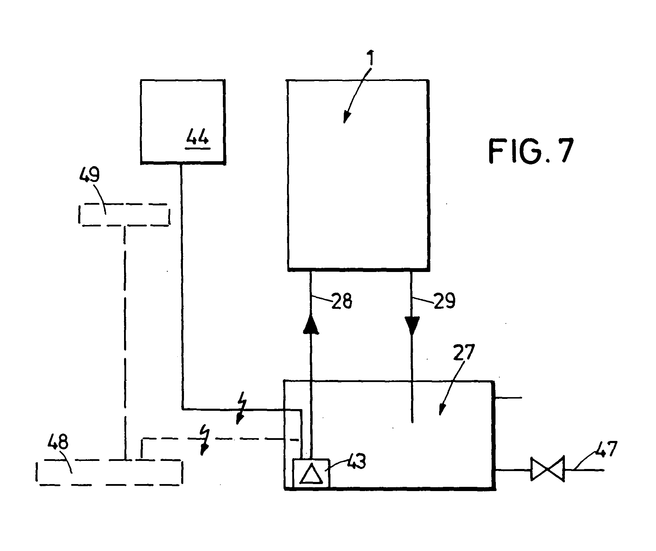

Bei der Anlage gemäß Fig. 7 ist ein von Hand befüllbarer Wasserspeicher 27 vorgesehen, der lediglich einen Warmwasser-Entnahmeanschluss 57 aufweist. Im Wasserspeicher 27 ist wiederum eine Solarpumpe 43 montiert, die über ein Photovoltaikelement 44 betrieben werden kann.

Nach der Wasserbefüllung von Hand wird bei Sonneneinstrahlung die Solarpumpe 43 betrieben. Das im Wasserspeicher 27 befindliche Kaltwasser wird über den Kollektor 1 gepumpt und dadurch erwärmt. Das erwärmte Wasser gelangt über die Rücklaufleitung 29 in den Wasserspeicher 27 zurück.

Bei Schatten oder schlechtem Wetter läuft das Wasser in den Speicher zurück, sodass sich bei erneuter Sonneneinstrahlung der Kollektor schneller aufheizen kann. Die Solarpumpe 43 startet bei erneutem Sonnenschein vorzugsweise zeitverzögert mit eine festgelegten Verzögerungsperiode, damit der Kollektor sich aufheizen kann.

Strichliert ist in Fig. 7 eine Alternative zu dem Photovoltaikelement 44 eingezeichnet. Statt der Solarpumpe 43 wird eine Akkumulator-betriebene Pumpe 48 vorgesehen, die über einen Lichtsensor 49 analog der Solarbetriebenen Pumpe 43 gesteuert wird.

## Patentansprüche

1. Solar-Flachkollektor zur Beheizung eines wärmeführenden Mediums, insbesondere zur Direktbeheizung von Brauchwasser, umfassend
- eine Zu- und Ableitung (11, 14) für das Medium, **gekennzeichnet durch**
- einen im Wesentlichen plattenförmigen Leitungsträger (2), in den auf einer Seite (4) ein oben offener Leitungskanal (8) in Form einer Vertiefung vorzugsweise mit mäanderartigem Verlauf in der Plattenebene einstückig eingeformt ist, und
- eine auf den Leitungsträger (2) auf der Seite (4) des offenen Leitungskanals (8) aufgesetzte, lichtdurchlässige Abschlussplatte (5), die mindestens auf Teilbereichen (16) beiderseits des Leitungskanals (8) mit dem Leitungsträger (2) fest verbunden ist.

2. Solar-Flachkollektor nach Anspruch 1, **dadurch gekennzeichnet, dass** die Abschlussplatte (5) zwischen den einzelnen Ästen (9) des Leitungskanals (8) am Leitungsträger (2) bei zueinander beabstandeten Punkten befestigt ist.

3. Solar-Flachkollektor nach Anspruch 1 oder 2, **dadurch gekennzeichnet, dass** die Abschlussplatte (5) derart mit dem Leitungsträger (2) verbunden ist, dass zwischen diesen beiden Bauteilen (2, 5) ein Kapillarspalt (19) zum Durchtritt des Mediums verbleibt.

4. Solar-Flachkollektor nach Anspruch 3, **dadurch gekennzeichnet, dass** der Kapillarspalt (19) durch flache Noppen (16) auf der Oberseite (4) des Leitungsträgers (2) erzeugt ist, in denen die Verbindung in Form einer Verschweißung zwischen Abschlussplatte (5) und Leitungsträger (2) angelegt ist.

5. Solar-Flachkollektor nach einem der vorgenannten Ansprüche, **dadurch gekennzeichnet, dass** die Abschlussplatte (5) versenkt in der Oberseite (4) des Leitungsträgers (2) angeordnet ist.

6. Solar-Flachkollektor nach einem der vorgenannten Ansprüche, **dadurch gekennzeichnet, dass** der Leitungsträger (2) ein einstückiges Tiefziehteil vorzugsweise aus Acryl ist.

7. Solar-Flachkollektor nach einem der vorgenannten Ansprüche, **dadurch gekennzeichnet, dass** der Leitungsträger (2) einen entgegen der Offenseite (4) des Leitungskanals (8) nach hinten abstehenden, umlaufenden Stützrand (20) aufweist, über den der Leitungsträger (2) an einer rückseitigen Grundplatte (3) anliegt.

8. Solar-Flachkollektor nach Anspruch 7, **dadurch gekennzeichnet, dass** der Zwischenraum (22) zwischen Leitungsträger (2) und Grundplatte (3) mit einem Hartschaum (24) zur Abstützung des Leitungsträgers (2) und dessen Verbindung mit der Grundplatte (3) ausgeschäumt ist.

9. Solar-Flachkollektor nach einem der vorgenannten Ansprüche, **dadurch gekennzeichnet, dass** die Zu- und/oder Ableitung in Form von Anschlussstutzen (11, 14) von hinten in den Leitungskanal (8) münden.

10. Solar-Flachkollektor nach einem der vorgenannten Ansprüche, **gekennzeichnet durch** eine frontseitige lichtdurchlässige Abdeckwanne (6).

11. Solar-Flachkollektor nach einem der vorgenannten Ansprüche, **dadurch gekennzeichnet, dass** die frontseitige Abschlussplatte (5) und gegebenenfalls Abdeckwanne (6) aus UV-durchlässigem Material, insbesondere Acrylglas bestehen.

12. Solarheizanlage zum Betrieb ohne Strom- und Wasser-Netzanschluss mit
- einem Solar-Flachkollektor (1) nach einem der vorgenannten Ansprüche,
- einem zu- und ablaufseitig mit dem Flachkollektor (1) verbundenen Wasserspeicher (27), und
- einer sonnenabhängig gesteuerten Förderpumpe (43, 48) zur Förderung des Wassers vom Wasserspeicher (27) zum Flachkollektor (1).

13. Solarheizanlage nach Anspruch 12, **dadurch gekennzeichnet, dass** die Förderpumpe (43) eine über ein Photovoltaikelement (44) stromversorgte Pumpe ist.

14. Solarheizanlage nach Anspruch 12 , **dadurch gekennzeichnet, dass** die Förderpumpe (48) eine akkumulatorbetriebene Pumpe ist, der ein Lichtsensor (48) zur sonnenabhängigen Betriebssteuerung zugeordnet ist.
